# EUROPEAN PATENT APPLICATION

(11) **EP 4 782 891 A2**
(43) Date of publication of application: **29.07.2026**
(21) Application number: 25226906.3
(22) Date of filing: 23.12.2025
(51) Int. Cl.: G02B 6/02, H01S 3/067, H04B 10/25

(54) **MULTI-CORE FIBER GAIN FLATTENING FILTER AND SHAPE CORRECTING FILTER**

(30) Priority: 03.01.2025 US 202519009299
(71) Applicant: SubCom, LLC, Eatontown, NJ 07724 (US)
(72) Inventor: Meigs, Andrew, Eatontown 07724 (US); Patenaude, Jared, Eatontown 07724 (US); Kolossovski, Kazmir, Eatontown 07724 (US)
(74) Representative: Arnold & Siedsma

(57) **Abstract**

A multicore optical fiber assembly is provided. The multicore optical fiber assembly may include an optical fiber, having a fiber diameter, a plurality of active cores, arranged within the optical fiber, and extending along a length of the optical fiber, and an energy blocker disposed within the optical fiber, and extending along the length of the optical fiber. As such, the energy blocker may be disposed between a first active core of the plurality of active cores, and a second active core of the plurality of active cores, where the energy blocker is arranged to block energy transfer from the first active core to the second active core.

## Description

### Background

### Field

Embodiments of the present disclosure relate to the field of optical communication systems. In particular, the present disclosure relates to techniques for improved performance of optical fiber amplifiers.

### Discussion of Related Art

A recent advancement in the fiber optic industry is the creation of optical fibers having not one single-mode core, but rather, multiple single-mode cores (MCF), which cores may be arranged in a variety of configurations: 1x2, 2x2, 1x4, 7 in a hexagonal pattern, etc. To incorporate these multi-core fibers in a communication system, typically "fan-in" and "fan-out" (FIFO) structures may used to connect multiple single-mode fibers with the multi-core fiber. These FIFO structures allow the MCF to be used with conventional single-mode components, such as isolators, amplifiers and filters. There are several shortcomings of this approach: the difficulty in fabrication of the FIFO components, the length of the FIFO structures, the number of single mode components, the volume of the components, etc. as well as the complexity of preservation the ordering/pairing of the cores of the multi-core fibers.

In addition, the crosstalk that may occur between different cores is a major issue in MCFs. For that reason, two-core fibers have become the preferred implementation of MCF in recent multi-core technology, where one core contains East-bound traffic and the other core contains West-bound traffic. Thus, crosstalk between the cores is less an issue due to the counter propagating traffic patterns. However, advances in isolating the cores in a multi-core fiber continue, making four-core fiber more attractive for the 200-micron to 250-micron fiber arena.

Two important elements in an optical fiber communication system are the Gain Flattening Filter (GFF) and the Shape Correction Filter (SCF). GFFs are used to correct the wavelength gain (efficiency) variation in fiber amplifiers, such as Erbium-doped fiber amplifiers. Similarly, SCFs are used to correct the overall system gain variations resulting in a flat response over the Dense Wavelength Division Multiplexing (DWDM) wavelength range. Typically, these filters are typically fiber Bragg gratings.

In view of the above, it may be appreciated that there are many challenges for improving the performance of fiber amplifiers based upon multi-core fibers. With respect to these and other considerations, the present disclosure is provided.

### Brief Summary

In one embodiment, a multicore optical fiber assembly is provided. The multicore optical fiber assembly may include an optical fiber, having a fiber diameter, a plurality of active cores, arranged within the optical fiber, and extending along a length of the optical fiber, and an energy blocker disposed within the optical fiber, and extending along the length of the optical fiber. As such, the energy absorber may be disposed between a first active core of the plurality of active cores, and a second active core of the plurality of active cores, where the energy blocker is arranged to block energy transfer from the first active core to the second active core.

In another embodiment, a bidirectional optical communications system is provided, including a first terminal, to launch a first optical communication traffic in a first direction over a bi-directional optical fiber arrangement, and a second terminal to launch a second optical communication traffic in a second direction, opposite the first direction, over the bi-directional optical fiber arrangement. The bidirectional optical fiber arrangement may include a plurality of amplifier assemblies, arranged along a plurality of spans, wherein a given amplifier assembly comprises a fiber amplifier, and a correcting filter, the correcting filter comprising a gain flattening filter, a shape correcting filter, or a line-build-out element. The correcting filter may include an optical fiber that is arranged with a plurality of active cores, and an energy blocker arranged to absorb energy from the plurality of active cores.

### Brief Description of the Drawings

**FIG. 1A** depicts a multi-core fiber, according to embodiments of the disclosure;
**FIG. 1B** depicts a side view of a variant of the multi-core fiber of FIG. 1A;
**FIG. 1C** depicts a scenario of operation of a reference multi-core fiber; structure;
**FIG. 1D** depicts a scenario of operation of the multi-core fiber of FIG. 1A, according to the embodiments of the disclosure;
**FIG. 1E** shows another multi-core fiber, according to embodiments of the disclosure;
**FIG. 1F** shows another multicore fiber, according to embodiments of the disclosure;
**FIG. 1G** shows a multicore fiber system, according to embodiments of the disclosure;
**FIG. 2** shows the optical transmission of a fiber Bragg grating, where the index of the surrounding media is equal to the index of the cladding;
**FIG. 3** shows an amplifier assembly according to embodiments of the disclosure;
**FIG. 4** shows a multicore fiber filter assembly, according to embodiments of the disclosure;
**FIG. 5A**presents one embodiment of an optical communications system;
**FIG. 5B** presents another embodiment of an optical communications system; and
**FIG. 5C** presents another embodiment of an optical communications system.

### Description of Embodiments

The present embodiments will now be described more fully hereinafter with reference to the accompanying drawings, in which exemplary embodiments are shown. The scope of the embodiments should not be construed as limited to the embodiments set forth herein. Rather, these embodiments are provided so that this disclosure will be thorough and complete, and will fully convey the scope of the embodiments to those skilled in the art. In the drawings, like numbers refer to like elements throughout.

Embodiments of the disclosure present multi-core optical fibers having novel structures that may termed 'energy absorbers' herein. According to various embodiments, the novel multi-core fibers may be incorporated into filters used in an optical fiber amplifier, such as an erbium doped fiber amplifier (EDFA). For simplicity, a doped fiber amplifier may be referred to herein as an EDFA. In particular non-limiting embodiments, the multi-core fibers as disclosed herein may be incorporated into gain flattening filters (GFF) or shape correction filters (SCF).

By way of reference, GFF and SCF Bragg filters are basically used as "equalizer" filters, that is, these type of filters selectively attenuate the incoming power, so that the output has a flat response across all wavelengths of interest. In a typical EDFA architecture, the erbium fiber is followed by an optical isolator and then a GFF. The optical isolator is used so the reflected energy from the GFF is absorbed rather than going back through the erbium amplifier. An SCF may perform the same function as a GFF, but the SCF is located within an optical communications span and serves not to flatten the output of a single amplifier, but rather, to flatten output of multiple amplifiers. An SCF can be made using a GFF and an isolator. But typically, an SCF is made using a slanted grating filter, where the reflected energy is sent into the cladding instead of being preserved in the fiber core. A special optical fiber is used for this filter, which fiber is termed a "Cladding Mode Suppressing" (CMS) fiber. Once the energy enters the cladding, the CMS fiber absorbs the reflected energy. A third element may also be used. Often a Line-Build-Out (LBO) element is incorporated into a fiber optic system to provide an additional amount of loss in the system. LBOs are typically constructed by making imperfect splices. However, an SCF filter with a constant wavelength loss does constitute an LBO. This allows the fabrication of LBOs in the same fashion as an SCF filter. As with the SCF filter, the location of where the rejected energy in an LBO goes is important for a multi-core fiber system.

The present embodiments address the issue of controlling the reflected energy in such fibers, in particular in multi-core optical fibers used as GFF or SCF components. Note that this reflected energy is essentially 'unwanted' energy. As an example, if, for an MCF GFF, an input isolator were to be used to block the reflected energy from the East-bound signal (where the reflected energy would be going in the western direction), the isolator would also block the West-bound traffic, which arrangement doesn't permit the optical fiber to work to carry two-way transmission

In an MCF SCF, a different issue arises. As noted, an SCF conducts reflected energy from a given core of a core-pair (as reflected light) into the cladding. But due to optical reciprocity, the reflected light will be coupled from the cladding back into the *second* core of the core pair, rather than being absorbed. Thus, the reflected energy from the East-bound traffic becomes crosstalk in the West-bound traffic.

To alleviate these issues, as detailed in the figures to follow, the present embodiments provide novel structures that are incorporated into a multicore fiber to absorb unwanted energy. Before describing these embodiments in detail, it is noted that, in the case of dual-core GFFs or SCFs, a dual-core CMS fiber is needed at a minimum. In one embodiment, an index barrier may be added to this dual-core fiber and placed between the two cores to minimize the crosstalk between the two CMS fibers. This barrier may also be absorptive in nature.

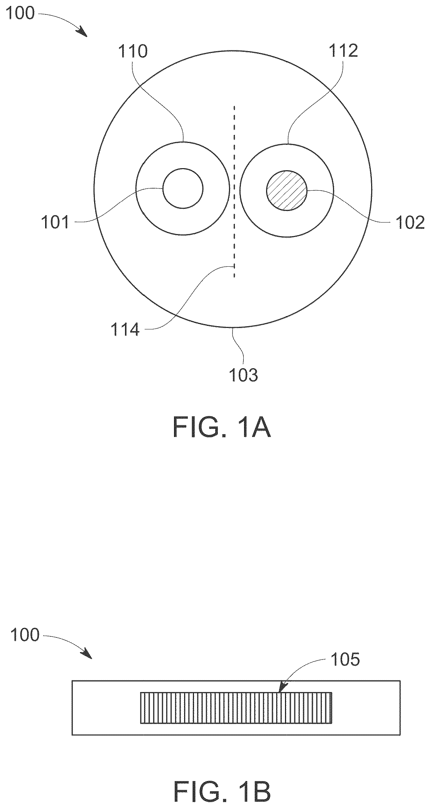

**FIG. 1A** depicts a multi-core fiber 100 in cross-section, according to embodiments of the disclosure. For purposes of illustration, the multi-core fiber 100 may be formed of a cladding glass matrix 103 that surrounds a pair of cores. An outer jacket (not specifically shown) may surround the cladding glass matrix 103 on an outer surface of the multi-core fiber 100. A core 101 may be termed an east-bound core, to conduct optical signals (light) for communication in an 'east-bound' direction of a bidirectional optical communications system. A core 102 may be termed a west-bound core, to conduct optical signals (light) for communication in a 'west-bound' direction of a bidirectional optical communications system. Surrounding the core 101 is a cladding mode suppressing secondary core, shown as secondary core 110, while surrounding the core 102 is a cladding more suppressing secondary core, shown as secondary core 112.

In addition, the multi-core fiber 100 includes a barrier 114, disposed between the core 101 and the core 102. Note that the core 101 may include slanted written into the core 101, so that, in operation, light may enter the CMS portion associated with core 101, meaning the secondary core 110, and thence enter into the cladding glass matrix 103. The barrier 114 is thus provided in order to prevent light that enters the cladding glass matrix 103 from entering the secondary core 112, associated with the core 102. By providing the barrier 114, the muti-core fiber 100 prevents energy that would otherwise propagate in the same direction as desired information that is carried in the core 102. Thus, the barrier 114 acts as an energy blocker to isolate the two core/CMS structures as shown and prevent crosstalk therebetween. In different embodiments, the barrier 114 may be formed as an absorptive layer, a metal barrier, or as a hollow region, such as regions of hollow fibers or any other index of refraction change.

**FIG. 1B** depicts a side view of a variant of the multi-core fiber of FIG. 1A. In this example, the multi-core fiber 100 is arranged as a filter or part of a filter, such as in a gain flattening filter of an amplifier assembly or a shape correction filter of an optical communications system. As such, the multi-core fiber 100 is arranged with a flattening element 105 such as a Bragg grating, to flatten the spectra of light conducted through the cores of the multi-core fiber 100.

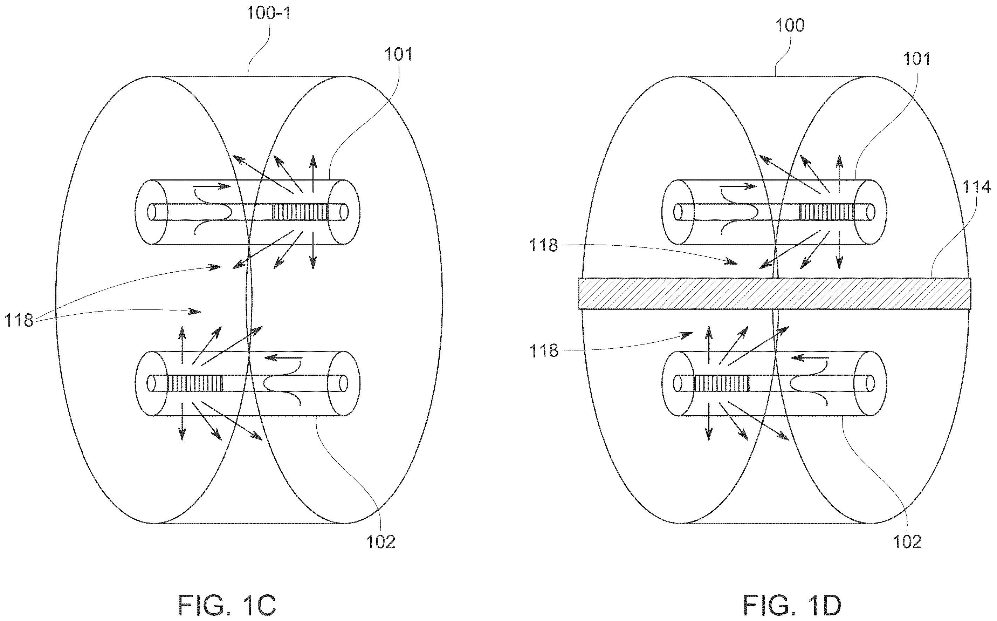

**FIG. 1C** depicts a scenario of operation of a reference multi-core fiber. In this scenario, the multi-core fiber 100-1 is depicted in operation where eastbound traffic is conducted in the core 101, while westbound traffic is conducted in the core 102. The outward directed arrows indicate energy or radiation that may be considered crosstalk 118 that emanates between the two cores as shown. In the absence of the barrier 114, this crosstalk 118 may propagate between the two cores, such that a given one of the cores receives crosstalk from the other one of the cores.

**FIG. 1D** depicts a scenario of operation of the multi-core fiber of FIG. 1A, where the barrier 114 is included, such that the crosstalk 118, or more precisely, potential crosstalk, is blocked from propagating from one of the cores to the other of the cores.

In additional embodiments of the disclosure, energy absorption in a multi-core optical fiber may be provided by adding 'dark' cores within an optical fiber to preferentially absorb energy that is reflected into the cladding. In particular, the dark cores may be arranged to be in closer proximity to active cores than the proximity of one active core to the other active core. The dark cores may also contain a complementary Bragg grating to facilitate the scatter of energy into the dark core. Due to reciprocity, just as a grating can scatter light out of the active core, a grating can be used to help facilitate directing the scattered light into another core, such as a non-active or "dark" core.

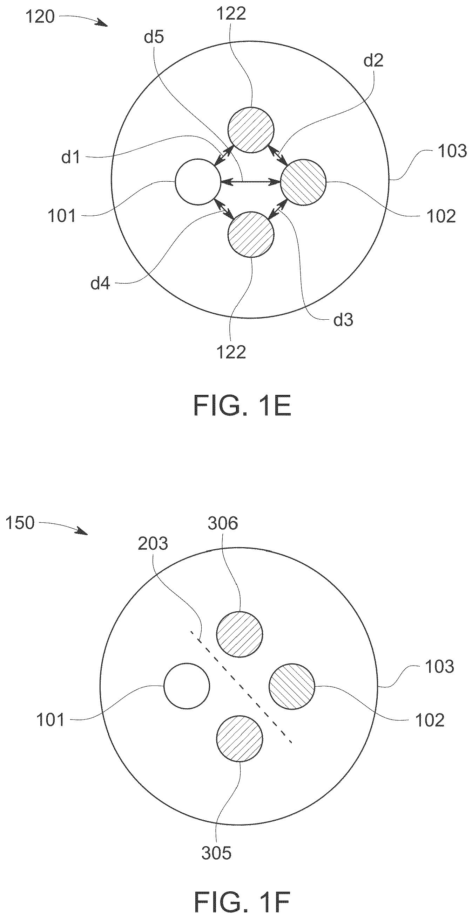

To illustrate an example of this approach, **FIG**. **1E** shows another multi-core fiber, shown as multi-core fiber 120, according to some embodiments of the disclosure. The structure of multi-core fiber 120 introduces preferential energy absorbing features within the multi-core fiber 120. As in FIG. 1E, the multi-core fiber 120 includes a core 101 and a core 102, forming a core pair that are designed to conduct light signal traffic in mutually opposite directions (optical paths). For clarity, the secondary core 110 and secondary core 112 have been omitted from the illustration of FIG.1E. However, it may be understood that in various embodiments, the secondary core 110 and secondary core 112 are present. Instead of providing a barrier 114 between core 101 and core 102, the multi-core fiber 120 provides two "dark" cores, shown as dark cores 122. In this arrangement, the energy reflecting from the slanted gratings that are provided in the secondary core 110 and secondary core 112 may be coupled into a dark core 122. Thus, the dark cores act as energy blockers for energy that may otherwise be transmitted by the core 102 and the core 101. Note that in various embodiments the slanted Bragg gratings will be written over a very limited length of the multi-core fiber 120 (e.g., a length of 10mm to 100mm), the likelihood of light radiating back out of the dark cores 122 and back into the core 101 or core 102, is minimal.

Note that in the arrangement of FIG. 1E, the core 101, core 102, secondary core 110, and secondary core 112 are provided at the corners of a quadrilateral, such as a diamond, a rectangle, or a square. In particular, the arrangement is such that the distances (d1, d2) between an upper one of the dark cores 122, on the one hand, and the core 101 or the core 102, respectively, are all less than the distance d5 between the core 101 and core 102. Moreover, the arrangement is such that the distances (d3, d4) between a lower one of the dark cores 122, on the one hand, and the core 101 or the core 102, respectively, are also less than the distance d5 between the core 101 and core 102. This geometry facilitates the conduction of energy from a core 101 or a core 102 into an adjacent one of the dark cores 122. Note that according to some embodiments, d1 and d4 (nor d2 and d3) do not have to be equal to one another.

**FIG. 1F** shows a multi-core fiber 150, according to other embodiments of the disclosure. In this instance, the multi-core fiber 150 employs a combination of barrier elements, discussed previously in FIG. 1A and FIG. 1E. In the illustration shown, an energy blocker 203 is provided that extends between a first grouping of elements, including the upper one of the dark cores 305, and the core 102, and a second grouping of elements, including the lower one of the dark cores 306 and the core 102. As in the embodiment of FIG. 1F, a secondary core 110 and a secondary core 112 may extend around the core 101 and the core 102, respectively. Thus, in this embodiment, each of the active cores, core 101 and core 102, is paired with a dark core , and the energy blocker 203 further acts to separate Eastbound traffic from Westbound traffic.

In different embodiments, the energy blocker 203 may be manifested in several different ways: as an energy absorbing layer; as a change in the index of refraction of the cladding regio; as a structured perturbation of some design, such as a Bragg grating.

In additional embodiments, a multi-core fiber may include more active cores, such as two active core pairs for a total of four cores, and so forth. However, for multi-core fibers having a diameter of approximately 125 mm, for example, a total of four active cores may present a practical limit in current day technology.

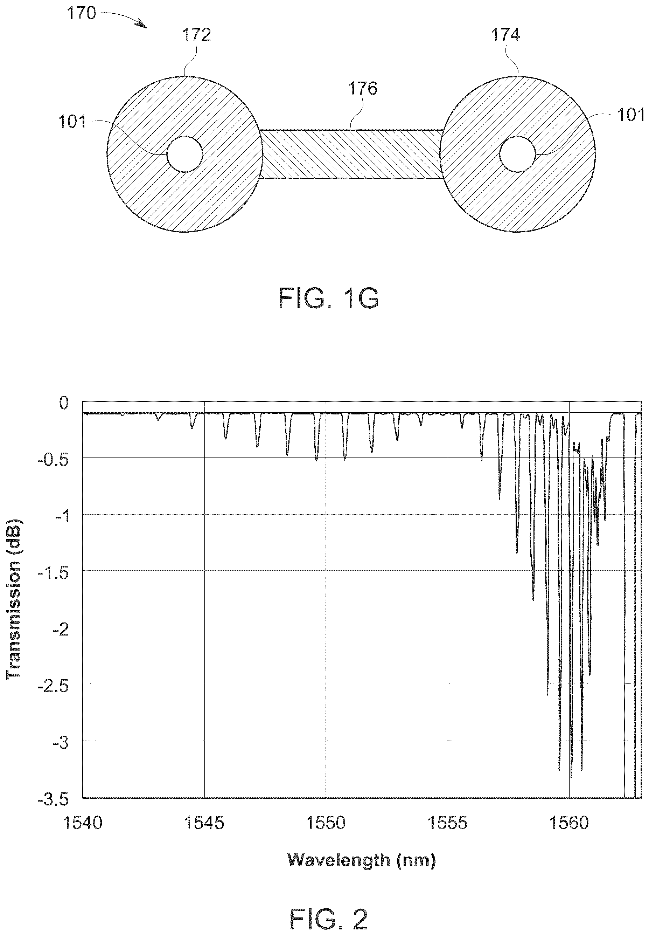

Another approach to implementing an energy blocker between two cores is to physically separate the cores to the point that the fiber containing the cores is no longer circular in cross-section. At an extreme, the cores would become elements of a flat-ribbon cable of fibers. However, there are practical reasons (i.e. stripping and splicing issues) that make this sort more challenging. **FIG. 1G** shows a multi-core fiber system 170, according to embodiments of the disclosure. In this case, the multi-core fiber system 170 includes a fiber 172, having a core 101, and fiber 174, having a core 102. The multi-core fibers may be joined by element 176, which element may act as an energy blocker, preventing crosstalk between core 101 and core 102, by virtue of the physical distance between the cores.

In other embodiments of the disclosure, a multi-core optical fiber may be partitioned into different segments, where the GFF portion (or SCF portion) of the optical fiber may exhibit a wider diameter than other portions of the multi-core optical fiber. In particular, a GFF fiber segment or SCF fiber segment may be created having a larger diameter, such as greater than 250 µm, so that additional cores may be fabricated within the wider diameter fiber segment.

**FIG. 2** shows the transmission spectra of a fiber Bragg grating centered at 1565nm. Note that the transmission of light at other (lower) wavelengths is affected by a comb-like structure. These comb features are due to the reflected modes coming off the grating. By modifying the index of the cladding and the surrounding material, these modes can be suppressed because the energy is no longer contained solely in the cladding, but in the cladding and the surrounding material. Thus, this reflected energy is lost into the surrounding material. In this manner, the reflected energy can be preferentially channeled away from the other active core and to an energy sink (absorber, dark core, etc).

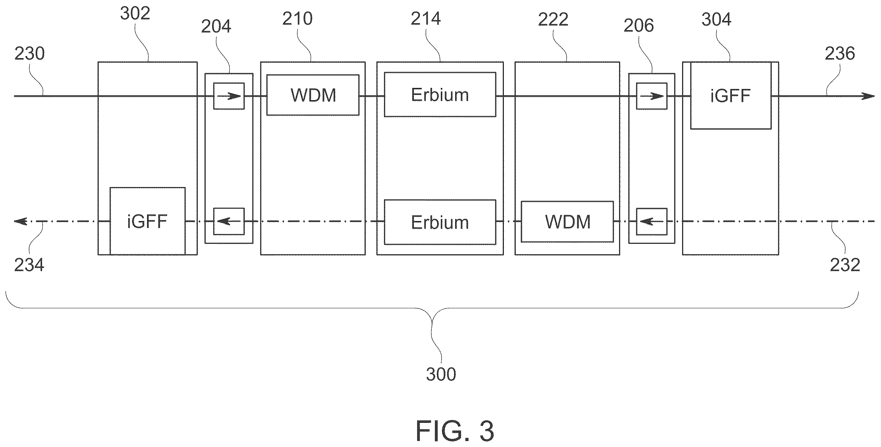

**FIG. 3** shows a multicore fiber amplifier assembly, according to embodiments of the disclosure. In this embodiment, the assembly 300 may implement bi-directional transmission in the context of a multi-core fiber. As an example, a first path is shown from an input end 230 to an output end 236, representing a transmission path for a first core in a multi-core fiber. A second path is shown from an input end 232 to an output end 234, representing a transmission path for a second core in the multi-core fiber. For example, the transmission path from input end 230 to output end 236 may correspond to the core 101 of FIG. 1A, while the transmission path from input end 232 to output end 234 may represent the core 102. In this embodiment, an isolator-GFF component 302 is provided on a first end and an isolator-GFF component 304 provided on a second end, with separate input/output isolators, as in assembly 202. Each of the isolator-GFF components may be arranged generally as multi-core fiber 100, or the variants therefore, depicted in FIGs. 1A-1F, to provide bi-directional protection against crosstalk in multi-core fibers. In this embodiment, the assembly 300 includes further elements, including a WDM 210, erbium fiber 214 (used to amplify the optical signal), isolator 204, WDM 222, and GFF isolator 206. Note that the isolator 204 and GFF isolator 206 may be arranged to provide bidirectional isolation that restricts traffic propagation to just one direction along a given core. These isolators may be configured according to known isolators in fiber amplifiers. Thus, the assembly 300 may represent a multi-core fiber amplifier, such as an EDFA, providing protection against bi-directional transmission along a given core, and preventing crosstalk between cores.

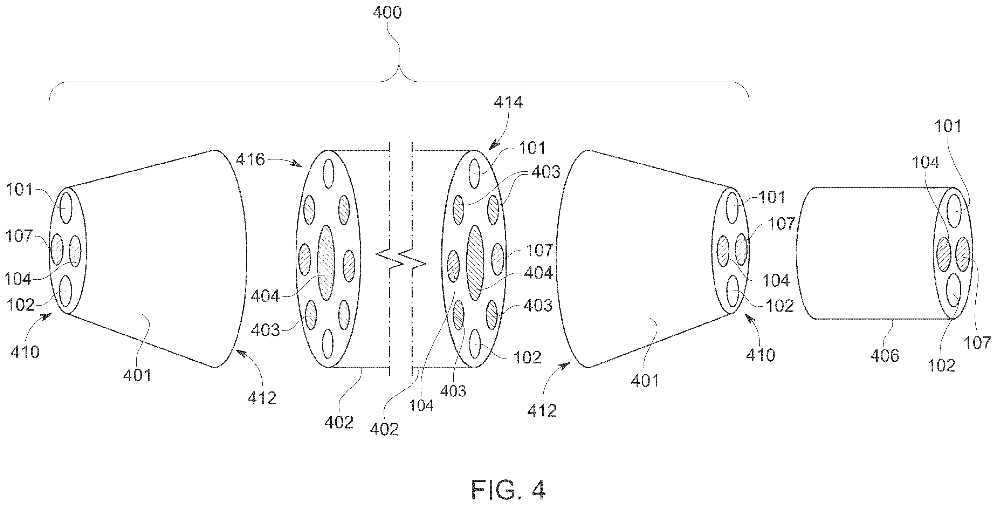

**FIG. 4** shows an exploded view of a multi-core filter assembly 400, according to further embodiments of the disclosure. The multi-core fiber assembly 400 may be formed of different fiber segments that have different diameters as shown. A fiber segment 406 is shown, having a relatively smaller diameter, which fiber segment may correspond to the majority of the total fiber length in a fiber amplifier, for example. The fiber segment 406 may be a multicore fiber segment and may include four active cores, including two pairs of active cores, shown as core 101, core 102, core 107, and core 104. For example, core 101 may conduct Eastbound traffic, while core 102 conducts Westbound traffic, core 107 may conduct Eastbound traffic, while core 104 conducts Westbound traffic. These active cores may be surrounded by secondary cores (not explicitly shown), as depicted at FIG. 1A, for example. Thus, the fiber segment 406 may form part of a bidirectional optical link that carries traffic in two separate cores in an Eastbound direction, and in an additional separate cores in a Westbound direction. The fiber segment 406 may lie outside of a GFF or SCF element.

The multi-core fiber assembly 400 may include a coupling element 401 that couples the fiber segment 406 to another multicore fiber segment, shown as multi-core fiber segment 402. The multi-core fiber segment 402 may form the main part of a GFF or SCF, in that the multi-core fiber segment 402 may include a flattening element, such as a Bragg grating, as described previously. In this example, the multi-core fiber segment 402 has a larger diameter than the fiber segment 406. The coupling element 401 may be formed of similar materials to the multi-core fiber segment 402 and fiber segment 406. The coupling element 401 may have a tapered shape, such as a truncated conical shape, as depicted in FIG. 4, where a narrow end 410 is sized according to the diameter of the fiber segment 406, and a wide end 412 is sized according to the diameter of the multi-core fiber segment 402. As with fiber segment 406, the coupling element 401 may include the cores 101-104, where the positions of these cores at the narrow end 410 match to the positions of like cores in the fiber segment 406. At the wide end 412, the positions of cores 101-104 of coupling element 401 may match to the positions of like cores in the multi-core fiber segment 402, at the first end 414.

Thus, when assembled, the cores 101-104 of multi-core fiber segment 402 are bonded to cores 101-104 of coupling element 401. During assembly of the multi-core fiber assembly 400, the wide end 412 and narrow end 410 may initially have slightly larger diameters than the desired respective final diameters, so that these ends may be ground and polished to the exact diameter of the fiber segment 406 and multi-core fiber segment 402, respectively.

In addition to the cores 101-104, the multi-core fiber segment 402 may include dark fibers or dark cores 403. For example, a series of dark cores may be arranged in alternating fashion between adjacent ones of the cores 101-104, as shown. Thus, in one embodiment a total of four dark cores 403 are present. These dark cores may act to absorb energy from the adjacent ones of the active cores, cores 101-104. In addition, the multi-core fiber segment 402 may include a central barrier 404 that acts as an energy blocker, which barrier may be an absorber, a dark fiber, or a hollow (air-filled) region, in different embodiments. The central barrier 404 may be positioned to block crosstalk between core 101 and core 102, as well as crosstalk between core 107 and core 104.

On a second end 416, the multi-core fiber segment 402 may couple to a wide end 412 of another coupling element 401, as shown. Likewise, another fiber segment, such as a fiber segment 406 (not shown) may couple to the narrow end of the second one of the coupling element 401, to the left in the picture.

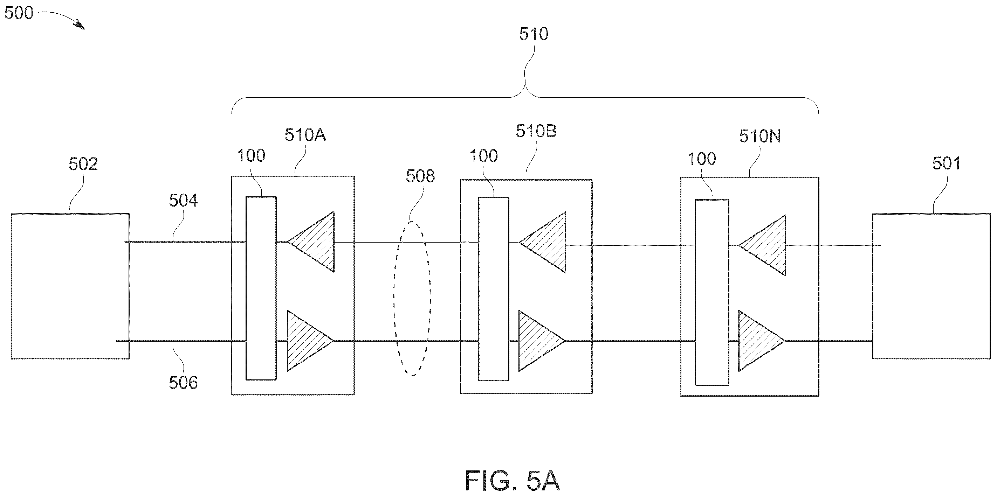

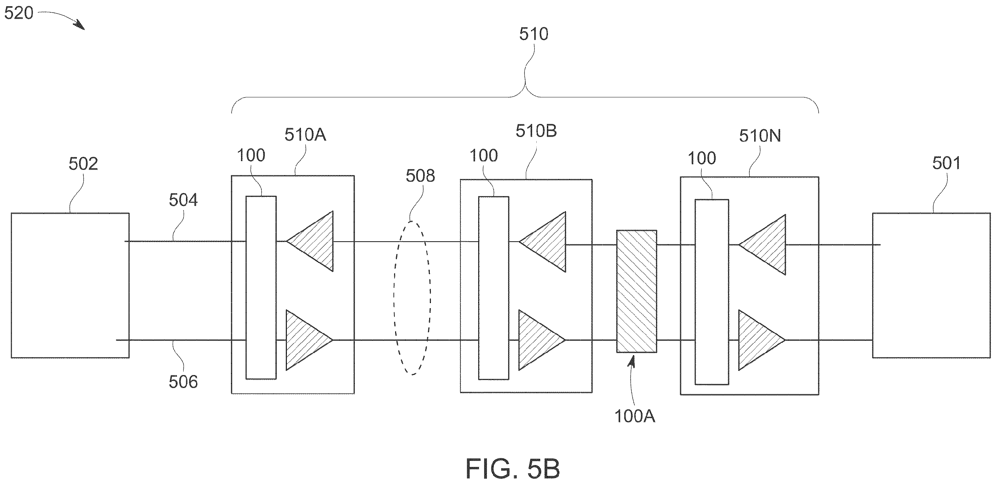

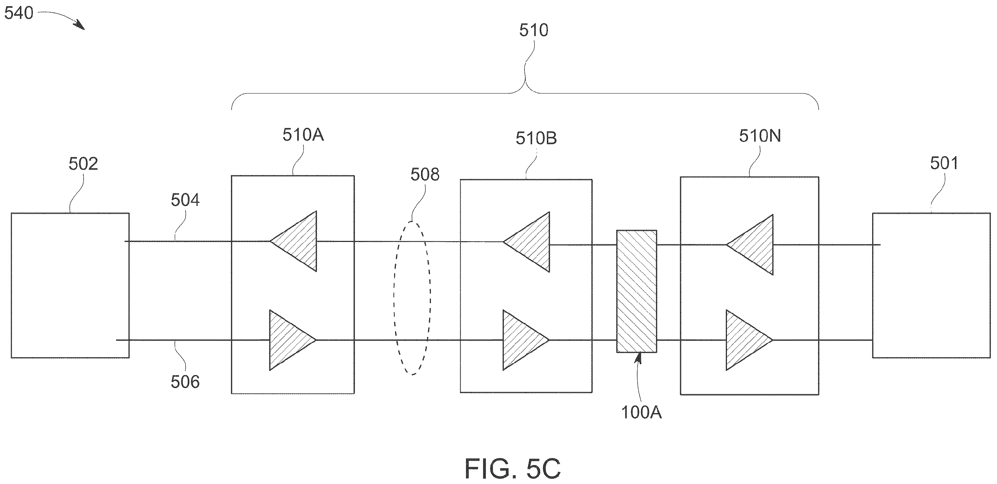

**FIG. 5A** depicts a communications system, shown as system 500. System 500 may include at least one optical repeater, which repeater may form part of a subsea optical communications system that spans hundreds of kilometers or up to several thousands of kilometers. The system 500 be employed, at least in part, to conduct bidirectional optical communications through an optical fiber, according to the present embodiments. As shown in FIG. 5A, the system 500 includes a pair of terminals that are shown as a first station 502, and a second station 501, where each of these stations may be terrestrial stations, and may be located at opposite ends to the system 500, in order to transmit and receive optical communications over a device, such as a cable. In some variants of the system 500, branching units may be provided, coupled to additional cable(s) that are connected to one or more additional terminals at the terrestrial end of said branching units, as known in the art. Bidirectional data transmission may be implemented by providing pairs of cores in an optical fiber. In the example shown, an optical fiber 508 may be arranged to conduct signals from 'west' to 'east' along a first core 504 formed in a first core, while the optical fiber 508 is further arranged to conduct signals from east to west in a second core 506. A series of optical amplifier assemblies 510 are shown as amplifier assembly 510A, amplifier assembly 510B, and amplifier assembly 510N, and are arranged along a length of the system 500. The amplifier assemblies 510A, 510B, ... 510N may be spaced according to a series of spans that may have a length on the order of 50 km, 100 km, or similar distance. In some examples, the number of amplifiers and spans in the system 500 may be on the order of several dozen or more. In various embodiments of the system 500 of FIG. 5, a given amplifier may include a doped fiber amplifier, such as an erbium doped fiber amplifier (EDFA). A given amplifier assembly may also have an associated gain flattening filter, based upon a multicore fiber 100 of other multicore fiber structure, as described herein. In some embodiments, a shape correction filter may be provided in a given span, also based upon a multi-core fiber 100 or other multicore fiber, as described herein.

**FIG. 5B** presents another embodiment of an optical communications system, shown as system 520. The system 520 may include components of the system 500, with like elements labeled the same, and functioning in a similar manner. In this embodiment, the system 520 includes a SCF 100A, which filter may have a similar structure to the shape correction filters, based upon the multi-core fiber 100. The SCF 100A may be disposed along a given span of the system 500, remote from the amplifier assemblies (510A-510N). The SCF 100A functions to remove any residual unwanted shape of a spectrum emerging from a string of amplifier assemblies. In various embodiments, the SCF 100A is located in a cable joint, outside of an amplifier assembly, which amplifier assembly may be located in a corresponding repeater. According to various embodiments of the disclosure, one of the SCF 100A will be in place for each of a single multi-core fiber. In some embodiments, one of SCF 100A will be placed along the system 520 at intervals of every ten repeaters or every twenty repeaters. Thus, in a system having 100 repeaters, there may be 5-10 of the SCFs 100A.

**FIG. 5C** presents another embodiment of an optical communications system, shown as system 540. The system 540 may include components of the system 520, with like elements labeled the same, and functioning in a similar manner. A difference is that in this embodiment, the system 540 does not include gain flattening filters based upon the multi-core fibers 100, as described above. In this case, Fan-in/Fan-out devices may be used in a repeater bottle while traditional GFFs are employed. However, trying to utilize FIFOs and traditional SCFs in a cable joint presents a volume constraint issue, because additional volume for the FIFOs, splints (splices), as well as the SCFs is needed. Thus, the use of an SCF 100A according to the present embodiments presents an attractive alternative because of the reduced space occupied as compared to traditional SCFs.

The present disclosure is not to be limited in scope by the specific embodiments described herein. Indeed, other various embodiments of and modifications to the present disclosure, in addition to those described herein, will be apparent to those of ordinary skill in the art from the foregoing description and accompanying drawings. Thus, such other embodiments and modifications are intended to fall within the scope of the present disclosure. Further, although the present disclosure has been described herein in the context of a particular implementation, in a particular environment for a particular purpose, those of ordinary skill in the art will recognize that its usefulness is not limited thereto and that the present disclosure may be beneficially implemented in any number of environments for any number of purposes. Accordingly, the claims set forth below should be construed in view of the full breadth and spirit of the present disclosure as described herein

## Claims

1. A multicore optical fiber assembly, comprising:
an optical fiber, having a fiber diameter;
a plurality of active cores, arranged within the optical fiber, and extending along a length of the optical fiber; and
an energy blocker disposed within the optical fiber, and extending along the length of the optical fiber, wherein the energy blocker is disposed between a first active core of the plurality of active cores, and a second active core of the plurality of active cores, and wherein the energy blocker is arranged to block energy transfer from the first active core to the second active core.

2. The multicore optical fiber assembly of claim 1, the plurality of active cores comprising a pair of active cores, wherein a first active core of the pair of active cores is arranged to conduct traffic along a first direction, and wherein a second active core of the pair of active cores is arranged to conduct traffic along a second direction, opposite the first direction.

3. The multicore optical fiber assembly of claim 1, wherein the energy blocker comprises a metal barrier, an energy absorbing layer, a structured perturbation to index of refraction between the active cores, a dark core, or a hollow element.

4. The multicore optical fiber assembly of claim 1, wherein a given core of the plurality of active cores is surrounded by a secondary layer that acts as a cladding mode suppressant element.

5. The multicore optical fiber assembly of claim 1, wherein the plurality of active cores comprises a pair of active cores that are separated from one another by a first distance, wherein the energy blocker comprises:
a pair of dark cores that are mutually arranged such that the first distance is greater than any distance that separates any one of the dark cores from any one of the active cores; and
a barrier that extends between a first grouping of elements, comprising a first one of the dark cores, and a first one of the active cores, and a second grouping of elements, comprising a second one of the dark cores and a second one of the active cores.

6. The multicore optical fiber assembly of claim 1, wherein the optical fiber comprises a first fiber segment, having a first diameter, the multicore optical fiber assembly further comprising:
a second fiber segment, having a second diameter, less than the first diameter; and
a coupling element, joining the first fiber segment to the second fiber segment, wherein the coupling element has a tapered structure.

7. The multicore optical fiber assembly of claim 6, the first fiber segment further comprising:
a plurality of dark cores, arranged in alternating fashion between adjacent ones of the plurality of active cores; and
a central barrier, disposed in a position to block crosstalk between the first active core and the second active core of each pair of active cores.

8. A bi-directional optical communications system, comprising:
a first terminal, to launch a first optical communication traffic in a first direction over a bi-directional optical fiber arrangement;
a second terminal to launch a second optical communication traffic in a second direction, opposite the first direction, over the bi-directional optical fiber arrangement, wherein the bi-directional optical fiber arrangement comprises:
a plurality of amplifier assemblies, arranged along a plurality of spans, wherein a given amplifier assembly comprises a fiber amplifier; and
a correcting filter, the correcting filter comprising a gain flattening filter, a shape correcting filter, or a line-build-out element, wherein the correcting filter comprises an optical fiber, the optical fiber being arranged with a plurality of active cores, and an energy blocker arranged to absorb energy from the plurality of active cores.

9. The bi-directional optical communications system of claim 8, the plurality of active cores comprising a pair of active cores, wherein a first active core of the pair of active cores is arranged to conduct traffic along a first direction, and wherein a second active core of the pair of active cores is arranged to conduct traffic along a second direction, opposite the first direction.

10. The bi-directional optical communications system of claim 9 wherein a given core of the plurality of active cores is surrounded by a secondary active core that acts as a cladding mode suppressant element.

11. The bi-directional optical communications system of claim 8, wherein the energy blocker comprises a metal barrier, an energy absorbing layer, a structured perturbation to index of refraction between the active cores, a dark core, or a hollow element.

12. The bi-directional optical communications system of claim 8, wherein the plurality of active cores comprises a pair of active cores that are separated from one another by a first distance, wherein the energy blocker comprises:
a pair of dark cores that are mutually arranged such that the first distance is greater than any distance that separates any one of the dark cores from any one of the active cores; and
a barrier that extends between a first grouping of elements, comprising a first one of the dark cores, and a first one of the active cores, and a second grouping of elements, comprising a second one of the dark cores and a second one of the active cores.

13. The bi-directional optical communications system of claim 8, wherein the optical fiber comprises a first fiber segment, having a first diameter, the correcting filter further comprising:
a second fiber segment, having a second diameter, less than the first diameter; and
a coupling element, joining the first fiber segment to the second fiber segment, wherein the coupling element has a tapered structure.

14. The bi-directional optical communications system of claim 11, the correcting filter comprising a gain flattening filter that is located in a fiber amplifier assembly of an optical repeater, the bi-directional optical communications system further comprising an additional correcting filter, the additional correcting filter comprising a shape correction filter that is disposed in a cable joint between a pair of optical repeaters.

15. The bi-directional optical communications system of claim 11, wherein the energy blocker comprises a dark core that includes a grating written in to facilitate energy absorption.
